# EUROPEAN PATENT APPLICATION

(11) **EP 4 837 471 A1**
(43) Date of publication of application: **11.11.2026**
(21) Application number: 26176335.3
(22) Date of filing: 04.05.2026
(51) Int. Cl.: A47J 37/06

(54) **AIR FRYER WITH HIGH APPLICABILITY**

(30) Priority: 05.05.2025 CN 202520868243 U; 05.05.2025 CN 202520879937 U; 18.12.2025 CN 202522681371 U
(71) Applicant: Ningbo Careline Electric Appliance Co., Ltd., Ningbo, Zhejiang 315000 (CN)
(72) Inventor: ZHANG, Yichi, Ningbo City, 315000 (CN); BAI, Rongjie, Ningbo City, 315000 (CN); LIN, Kairui, Ningbo City, 315000 (CN)
(74) Representative: Meyer-Dulheuer MD Legal Patentanwälte PartG mbB

(57) **Abstract**

The present disclosure relates to an air fryer with high applicability, comprising: a base defining an accommodating cavity with an open top; a head assembly detachably mounted on the base, a bottom portion of the head assembly being recessed upward to form a hot air cavity opening downward, a thermal circulation fan being disposed in the hot air cavity, and a bottom opening being formed at a bottom of the hot air cavity; a first pot assembly including a first pot body having a first top opening, the first pot body being detachably disposed in the accommodating cavity, wherein when the first pot body is disposed in the accommodating cavity and the head assembly covers the first pot assembly, the first top opening of the first pot body communicates with the bottom opening of the hot air cavity; and a second pot assembly including a second pot body having a second top opening and a pot support disposed outside the second pot body for supporting the second pot body, the second top opening being smaller in size than the first top opening, the pot support being detachably disposed in the accommodating cavity, wherein when the pot support and the second pot body are disposed in the accommodating cavity and the head assembly covers the second pot assembly, the second top opening of the second pot body communicates with the bottom opening of the hot air cavity.

## Description

### CROSS REFERENCE TO RELATED APPLICATIONS

The present disclosure claims priorities to the Chinese patent application No. 202520868243.0 filed to the China Patent Office on May 5, 2025 and entitled "Air Fryer with High Applicability", the Chinese patent application No. 202520879937.4 filed to the China Patent Office on May 5, 2025 and entitled "Safe-to-Use Air Fryer", and the Chinese patent application No. 202522681371.7 filed to the China Patent Office on December 18, 2025 and entitled "Air Fryer with Excellent Heat Dissipation Effect", the entire contents of which are incorporated herein by reference.

### TECHNICAL FIELD

The present disclosure relates to the technical field of kitchen household appliances and cooking appliances, in particular to an air fryer with high applicability.

### BACKGROUND

In conventional air fryers, due to the presence of only one pot body, food cooking is easily limited by the number of users and food types, failing to meet users' diversified cooking needs and resulting in poor user experience. In addition, for ease of storage and portability, some air fryers adopt a split-type structure comprising a head unit and a base. The head unit and base can be separated for storage and portability, and assembled for normal cooking. Such split-type outdoor air fryers are generally compact in size, and most of them are only equipped with a heat dissipation air duct in the head unit, with no heat dissipation structure arranged in the base. Consequently, they exhibit poor heat dissipation performance during operation, high body temperature, and a high risk of scalding users, leading to unsatisfactory user safety and experience.

### SUMMARY

The present invention provides an air fryer with high applicability, comprising: a base defining an accommodating cavity with an open top; a head assembly detachably mounted on the base, a bottom portion of the head assembly being recessed upward to form a hot air cavity opening downward, a thermal circulation fan being disposed in the hot air cavity, and a bottom opening being formed at a bottom of the hot air cavity; a first pot assembly including a first pot body having a first top opening, the first pot body being detachably disposed in the accommodating cavity, wherein when the first pot body is disposed in the accommodating cavity and the head assembly covers the first pot assembly, the first top opening of the first pot body communicates with the bottom opening of the hot air cavity; and a second pot assembly including a second pot body having a second top opening and a pot support disposed outside the second pot body for supporting the second pot body, the second top opening being smaller in size than the first top opening, the pot support being detachably disposed in the accommodating cavity, wherein when the pot support and the second pot body are disposed in the accommodating cavity and the head assembly covers the second pot assembly, the second top opening of the second pot body communicates with the bottom opening of the hot air cavity.

In one or more embodiments, the first pot assembly includes a first handle extending outward from a top of the first pot body, a second handle extending outward is disposed on the pot support, and a relief groove matching the first handle and the second handle is formed at a peripheral edge of the open top of the accommodating cavity,
wherein when the first pot body is disposed in the accommodating cavity, the first handle is located in the relief groove, and a top of the first handle is adapted to be flush with a top plane of the relief groove; and wherein when the pot support and the second pot body are disposed in the accommodating cavity, the second handle is located in the relief groove, and a top of the second handle is adapted to be flush with the top plane of the relief groove.

In one or more embodiments, the head assembly includes a housing, and a recess recessed inward is formed at a top of the housing, the recess defining a grip portion for gripping.

In one or more embodiments, a second flange is provided at the second top opening of the second pot body, the second flange being folded outward, a support step corresponding to the second flange is disposed on the pot support, and the second pot body is detachably mounted on the support step of the pot support via the second flange, the pot support is of an annular structure, and when the second pot body is mounted on the support step of the pot support via the second flange, an upper surface of the second flange is flush with an upper surface of the pot support.

In one or more embodiments, an extension portion is disposed at a peripheral edge of the bottom opening of the hot air cavity, a first flange is formed at the first top opening of the first pot body, and a second flange is provided at the second top opening of the second pot body, the extension portion extends outward, the first flange is folded outward, and the second flange is folded outward, wherein when the first pot body is disposed in the accommodating cavity and the head assembly covers the first pot assembly, the first flange abuts against the extension portion; and wherein when the pot support and the second pot body are disposed in the accommodating cavity and the head assembly covers the second pot assembly, the second flange abuts against the extension portion.

In one or more embodiments, the first pot body and the second pot body are made of high-temperature-resistant transparent materials, a viewing window communicating with the accommodating cavity is formed at a side of the base, and a window assembly closing the viewing window is disposed at the viewing window, a first frying plate with through holes is detachably suspended in the first pot body, a second frying plate with through holes is detachably suspended in the second pot body, and when the first pot body or the second pot body is disposed in the accommodating cavity, a projection of the first frying plate or the second frying plate on a plane where the viewing window is located at least partially overlaps the viewing window.

In one or more embodiments, a pot body with an open top is detachably suspended in the accommodating cavity, the pot body including the first pot assembly and the second pot assembly, a heat dissipation gap is adapted to be formed between the pot body and an inner wall of the accommodating cavity, and a plurality of cold air vents communicating with the heat dissipation gap are circumferentially disposed at a peripheral edge of the open top of the accommodating cavity; a heat dissipation air duct communicating with the atmosphere is disposed in the head assembly, a heat dissipation assembly is disposed in the heat dissipation air duct, a plurality of heat dissipation ports communicating with the heat dissipation air duct are disposed around the bottom opening of the hot air cavity, and when the head assembly is mounted on the base, the heat dissipation ports correspond to and communicate with the cold air vents.

In one or more embodiments, a hot air outlet communicating with the hot air cavity is formed on the hot air cavity, an exhaust vent corresponding to the hot air outlet is formed on a housing of the head assembly, and an air outlet channel communicating the hot air outlet and the exhaust vent is disposed in the head assembly; the heat dissipation air duct has a cold air outlet, the heat dissipation air duct is adapted to communicate with the air outlet channel via the cold air outlet, and the hot air outlet is adapted to correspond to at least part of the thermal circulation fan.

In one or more embodiments, a limiting portion is provided at a peripheral edge of the bottom opening of the hot air cavity, and the limiting portion extends downward, a limiting groove corresponding to the limiting portion is formed at a peripheral edge of the open top of the accommodating cavity, and when the head assembly is mounted on the base, the limiting portion is detachably engaged with the limiting groove, a communication channel is disposed in the limiting portion, one end of the communication channel communicates with the heat dissipation air duct, and the other end is provided with the heat dissipation port; the cold air vent is disposed in the limiting groove, and when the limiting portion is engaged with the limiting groove, the communication channel communicates the heat dissipation air duct and the heat dissipation gap.

In one or more embodiments, a handle extending outward is formed at a top of a side wall of the pot body, a base support forming at least part of the heat dissipation gap is disposed at a peripheral edge of the open top of the accommodating cavity, the handle rests on the base support, the pot body is suspended in the accommodating cavity via the handle, a relief groove matching the handle is formed on the base support, the handle is detachably limited in the relief groove, and a top of the handle is flush with a top plane of the relief groove.

In one or more embodiments, a drive system is disposed above the hot air cavity and is drivingly connected to the heat dissipation assembly and the thermal circulation fan, a housing covers the drive system, an installation cavity is defined in the housing, a first ventilation opening communicating the atmosphere and the installation cavity is formed at a side of the housing, a lower portion of the installation cavity communicates with the heat dissipation air duct, and a second ventilation opening communicating the atmosphere and the heat dissipation gap is formed at a bottom of the base, a downwardly recessed groove is formed at a top of the housing, and a third ventilation opening communicating the atmosphere and the installation cavity is formed on a side wall of the downwardly recessed groove.

In one or more embodiments, a heat dissipation assembly and a drive system are disposed in the heat dissipation air duct, the drive system being drivingly connected to the heat dissipation assembly and the thermal circulation fan; the head assembly includes a housing disposed around the drive system, a plurality of first ventilation openings communicating with the heat dissipation air duct are spaced circumferentially on the housing, and projections of the first ventilation openings and the drive system in a vertical direction at least partially overlap.

In one or more embodiments, an installation cavity forming at least part of the heat dissipation air duct is defined in the housing, a downwardly recessed groove is formed at a top of the housing, a third ventilation opening communicating the atmosphere and the installation cavity is formed on a side wall of the downwardly recessed groove, a top cover covering at least part of the third ventilation opening is disposed at an opening of a top of the downwardly recessed groove, and a grip portion for gripping is formed on the top cover.

In one or more embodiments, the head assembly further includes a casing covering the hot air cavity, an outer dimension of the casing is larger than an outer dimension of the housing, an exhaust vent communicating with the hot air cavity is formed on the casing, the exhaust vent is located at a side of the casing, an inwardly recessed installation groove is circumferentially formed at a joint between the housing and the casing, and the first ventilation openings are arranged in the inwardly recessed installation groove.

In one or more embodiments, a heat dissipation gap communicating with the heat dissipation air duct is formed between the pot body and a side wall of the accommodating cavity, and second ventilation openings communicating with the heat dissipation gap are formed at bottoms of opposite side walls of the base.

### BRIEF DESCRIPTION OF THE DRAWINGS

In order to describe technical solutions in specific implementations of the present disclosure or in the prior art more clearly, the accompanying drawings that need to be used in the description of the specific implementations or the prior art will be briefly introduced below. Apparently, the accompanying drawings in the following description are some implementations of the present disclosure, and for those of ordinary skill in the art, on the premise of no creative labor, other accompanying drawings may also be obtained from these accompanying drawings.
FIG. 1 is an overall schematic view of an air fryer with high applicability according to a first embodiment of the present disclosure, with a first pot assembly installed.
FIG. 2 is an exploded structural view of the air fryer with high applicability according to the first embodiment of the present disclosure, with the first pot assembly installed.
FIG. 3 is an installation view of the first pot assembly mounted in the base of the air fryer with high applicability according to the first embodiment of the present disclosure.
FIG. 4 is an overall cross-sectional view of the air fryer with high applicability according to the first embodiment of the present disclosure, with the first pot assembly installed.
FIG. 5 is an exploded structural view of the air fryer with high applicability according to the first embodiment of the present disclosure, with a second pot assembly installed.
FIG. 6 is an installation view of the second pot assembly mounted in the base of the air fryer with high applicability according to the first embodiment of the present disclosure.
FIG. 7 is an overall cross-sectional view of the air fryer with high applicability according to the first embodiment of the present disclosure, with the second pot assembly installed.
FIG. 8 is an overall schematic view of an air fryer with high applicability according to a second embodiment of the present disclosure.
FIG. 9 is a partial exploded structural view of the air fryer with high applicability according to the second embodiment of the present disclosure.
FIG. 10 is an overall exploded structural view of the air fryer with high applicability according to the second embodiment of the present disclosure.
FIG. 11 is an installation view of a pot body of the air fryer with high applicability according to the second embodiment of the present disclosure.
FIG. 12 is an overall cross-sectional view of the air fryer with high applicability according to the second embodiment of the present disclosure.
FIG. 13 is an overall schematic view of an air fryer with high applicability according to a third embodiment of the present disclosure.
FIG. 14 is an exploded structural view of the air fryer with high applicability according to the third embodiment of the present disclosure.
FIG. 15 is an overall cross-sectional view of the air fryer with high applicability according to the third embodiment of the present disclosure.
FIG. 16 is a schematic view of air intake and air exhaust of the air fryer with high applicability according to the third embodiment of the present disclosure.

### DETAILED DESCRIPTION

To make the objectives, technical solutions, and advantages of the embodiments of the present disclosure clearer, the technical solutions in the embodiments of the present disclosure will be clearly and completely described below with reference to the accompanying drawings in the embodiments of the present disclosure. Obviously, the described embodiments are part of the embodiments of the present disclosure, not all of the embodiments. The components of the embodiments of the present disclosure generally described and illustrated in the drawings herein may be arranged and designed in a variety of different configurations.

Thus, the following detailed description of the embodiments of the present disclosure provided in the drawings is not intended to limit the scope of the claimed disclosure, but merely represents selected embodiments of the present disclosure. Based on the embodiments in the present disclosure, all other embodiments obtained by those skilled in the art without creative efforts shall fall within the protection scope of the present disclosure. Embodiment 1:

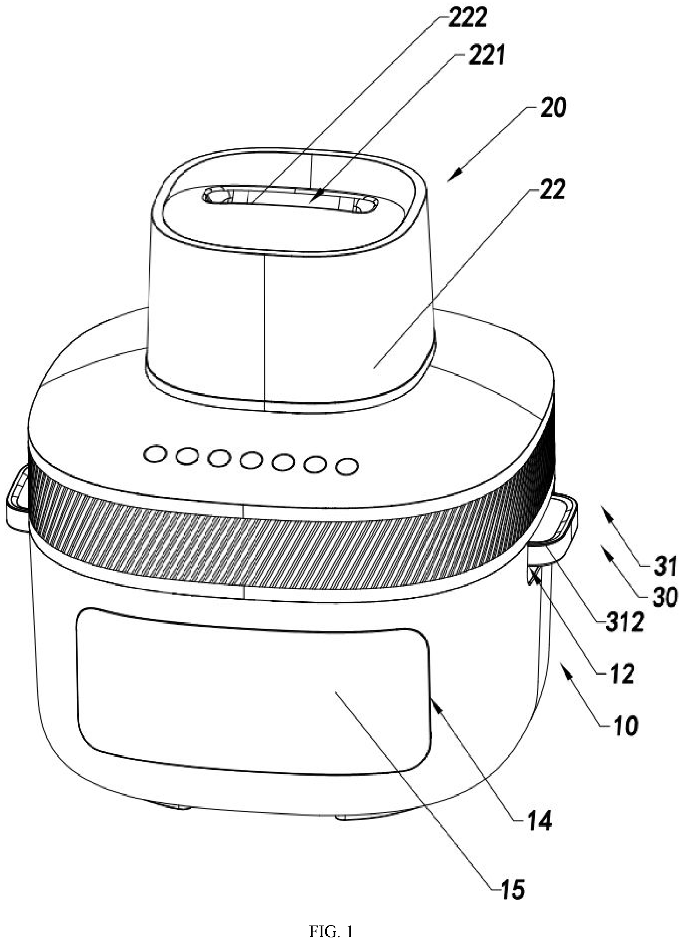

FIGS. 1 to 7 are schematic views of a first embodiment of an air fryer with high applicability provided by the present disclosure, the air fryer comprises a base 10, a head assembly 20 detachably mounted on the base 10, and a pot assembly 30, the base 10 defines an accommodating cavity 11 with an open top, and the pot assembly 30 is detachably disposed in the accommodating cavity 11 through the open top, a bottom portion of the head assembly 20 is recessed upward to form a hot air cavity 21 opening downward, and a thermal circulation fan 40 for generating circulating hot airflow is disposed in the hot air cavity 21, a bottom opening is formed at a bottom of the hot air cavity 21. When the head assembly 20 is mounted on the base 10, the bottom opening of the hot air cavity 21 communicates with the open top of the accommodating cavity 11, and the circulating hot airflow generated by the thermal circulation fan 40 in the hot air cavity 21 passes through the bottom opening and the open top into the pot assembly 30 to heat food in the pot assembly 30.

As shown in FIGS. 1 to 7, in an optional embodiment, the pot assembly 30 includes a first pot assembly 31 and a second pot assembly 32, the first pot assembly 31 further includes a first pot body 311 having a first top opening, and the first pot body 311 is adapted to be detachably disposed in the accommodating cavity 11. When the first pot body 311 is disposed in the accommodating cavity 11 and the head assembly 20 covers the first pot assembly 31, the first top opening of the first pot body 311 communicates with the bottom opening of the hot air cavity 21, the second pot assembly 32 includes a second pot body 321 having a second top opening and a pot support 322 disposed outside the second pot body 321 for supporting the second pot body 321, the second top opening is smaller in size than the first top opening, and the pot support 322 is detachably disposed in the accommodating cavity 11. When the pot support 322 and the second pot body 321 are disposed in the accommodating cavity 11 and the head assembly 20 covers the second pot assembly 32, the second top opening of the second pot body 321 communicates with the bottom opening of the hot air cavity 21. By configuring the air fryer in a split-type structure, the head assembly 20 can be separated from the base 10 for convenient storage and transportation, and users can carry the separated head assembly 20 and base 10 for outdoor use, effectively improving the applicability and user convenience of the air fryer. Meanwhile, by providing interchangeable first and second pot assemblies 31, 32 with different capacities in the air fryer, a series of limitations caused by the fixed capacity of a single pot body in conventional air fryers are eliminated, allowing users to switch between different pot bodies according to the number of users and/or food types to meet their diversified cooking needs, thereby significantly enhancing the applicability and practicality of the air fryer. As shown in FIGS. 1 to 7, in an optional embodiment, the first pot assembly 31 includes a first handle 312 extending outward from a top of the first pot body 311, and a second handle 323 extending outward is disposed on the pot support 322, a relief groove 12 matching the first handle 312 and the second handle 323 is formed at a peripheral edge of the open top of the accommodating cavity 11. When the first pot body 311 is disposed in the accommodating cavity 11, the first handle 312 is located in the relief groove 12, and a top of the first handle 312 is adapted to be flush with a top plane of the relief groove 12. When the pot support 322 and the second pot body 321 are disposed in the accommodating cavity 11, the second handle 323 is located in the relief groove 12, and a top of the second handle 323 is adapted to be flush with the top plane of the relief groove 12. By disposing the first handle 312 and the second handle 323 in the relief groove 12 and setting their tops flush with the top plane of the relief groove 12, the first handle 312 and the second handle 323 are concealed to enhance the overall aesthetic appearance of the air fryer, and the fitting degree between the head assembly 20 and the base 10 is improved, thereby enhancing the installation stability of the head assembly 20 and the performance stability of the air fryer. Meanwhile, the relief groove 12 is adapted to position the first handle 312 and the second handle 323, which effectively reduces the installation difficulty of the first and second pot assemblies 31, 32 and improves user convenience and experience. In addition, the relief groove 12 is adapted to limit the first handle 312 and the second handle 323, preventing random sliding of the first and second pot assemblies 31, 32 during installation that causes localized food accumulation and poor cooking effect, thus effectively improving the cooking performance of the air fryer.

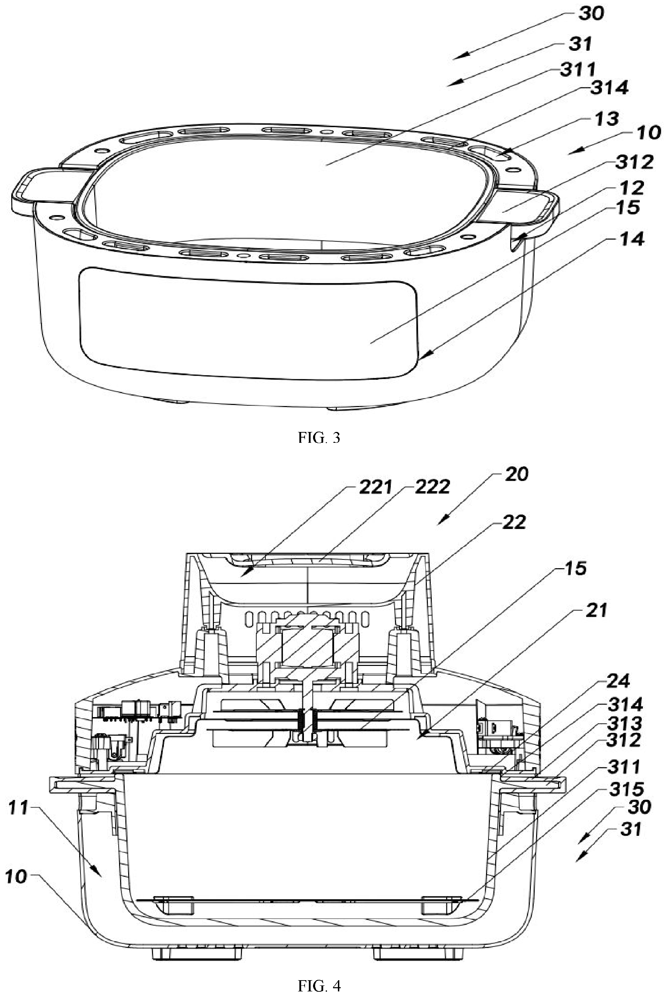

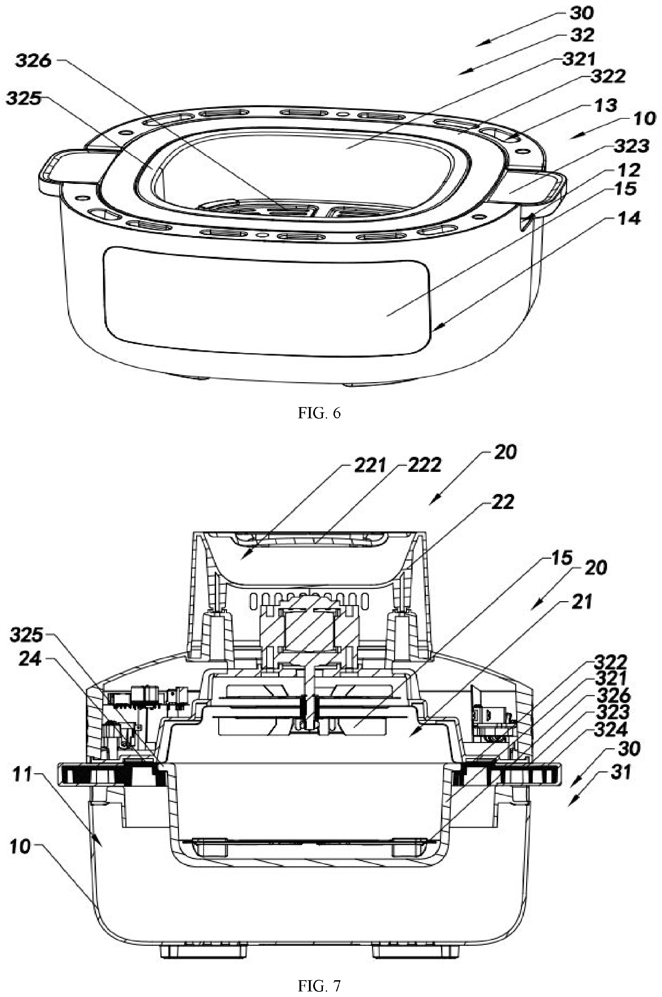

As shown in FIGS. 4 and 7, in an optional embodiment, a first protective sleeve 313 and a second protective sleeve 324 are sleeved outside the first handle 312 and the second handle 323, respectively, the first protective sleeve 313 and the second protective sleeve 324 are made of high-temperature-resistant and heat-insulating materials such as rubber and silicone. In the air fryer, the first protective sleeve 313 and the second protective sleeve 324 provide heat insulation and protection. By sleeving the first and second handles 312, 323 with the first and second protective sleeves 313, 324 made of high-temperature-resistant and heat-insulating materials, the risk of users being scalded by the first and second handles 312, 323 during use is reduced, effectively improving user safety.

As shown in FIGS. 1, 4 and 7, in an optional embodiment, the head assembly 20 includes a housing 22, and a recess 221 recessed inward is formed at a top of the housing 22, the recess 221 defines a grip portion 222 for gripping. By forming the inwardly recessed recess 221 at the top of the housing 22 and providing the grip portion 222 in the recess 221, users can easily grip the grip portion 222 to install and detach the head assembly 20, reducing the installation and detachment difficulty of the head assembly 20 and improving user convenience. Meanwhile, the grip portion 222 is concealed to enhance the overall aesthetic appearance of the air fryer.

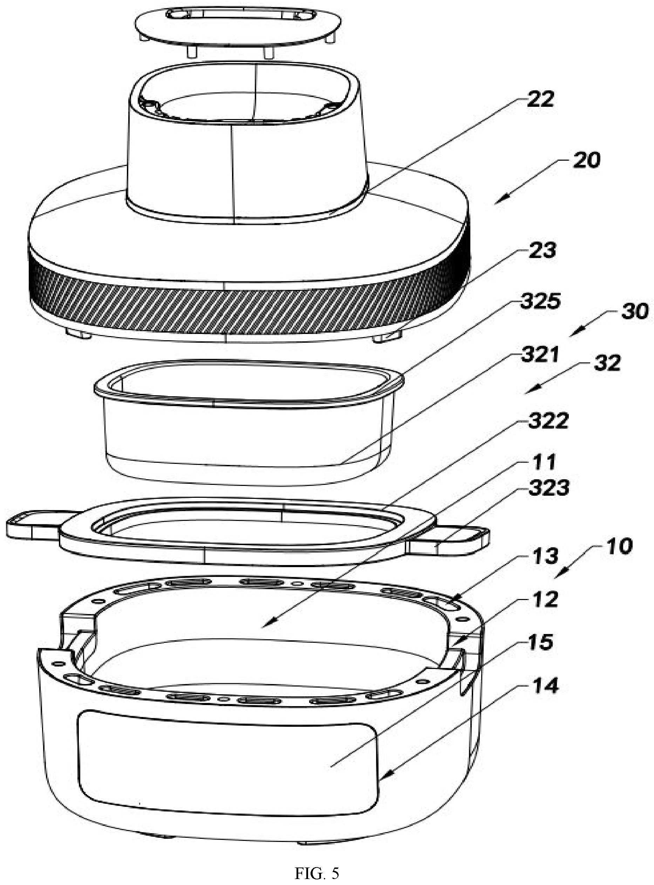

As shown in FIGS. 5 to 7, in an optional embodiment, a second flange 325 is provided at the second top opening of the second pot body 321, the second flange 325 being folded outward, and a support step corresponding to the second flange 325 is disposed on the pot support 322, the second pot body 321 is adapted to be detachably mounted on the support step of the pot support 322 via the second flange 325. By forming the outwardly folded second flange 325 at the second top opening of the second pot body 321, the contact area between the second pot body 321 and the pot support 322 is increased, effectively improving the connection stability between the second pot body 321 and the pot support 322 and the performance stability of the air fryer.

As shown in FIGS. 5 to 7, in an optional embodiment, the pot support 322 is of an annular structure. When the second pot body 321 is mounted on the support step of the pot support 322 via the second flange 325, an upper surface of the second flange 325 is flush with an upper surface of the pot support 322. This configuration not only conceals the second flange 325 to enhance the overall aesthetic appearance of the air fryer, but also enables better fitting between the second pot assembly 32 and the bottom opening of the hot air cavity 21 when the head assembly 20 is mounted on the base 10, reducing the leakage of hot airflow from the hot air cavity 21 and the second pot body 321 that would otherwise affect the cooking effect.

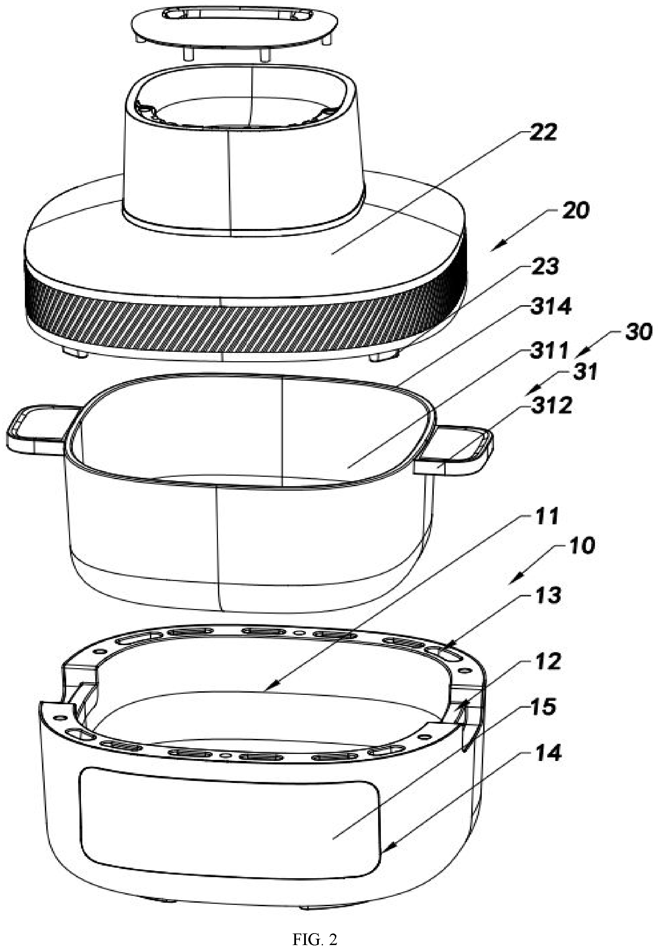

As shown in FIGS. 2 and 5, in an optional embodiment, a downwardly extending limiting portion 23 is disposed at a peripheral edge of the bottom opening of the hot air cavity 21, and a limiting groove 13 corresponding to the limiting portion 23 is formed at a peripheral edge of the open top of the accommodating cavity 11. When the head assembly 20 is mounted on the base 10, the limiting portion 23 is adapted to be detachably engaged with the limiting groove 13, the limiting portion 23 and the limiting groove 13 are adapted to position the installation of the head assembly 20, effectively reducing the installation difficulty of the head assembly 20 and improving user convenience. Meanwhile, the limiting portion 23 and the limiting groove 13 are adapted to limit the installation of the head assembly 20, preventing random sliding and falling damage of the head assembly 20 during installation, effectively ensuring the performance stability of the air fryer and user experience.

As shown in FIG. 4, in an optional embodiment, an extension portion 24 is disposed at a peripheral edge of the bottom opening of the hot air cavity 21, the extension portion 24 extends outward, and a first flange 314 is formed at the first top opening of the first pot body 311 the first flange 314 is folded outward. When the first pot body 311 is disposed in the accommodating cavity 11 and the head assembly 20 covers the first pot assembly 31, the first flange 314 abuts against the extension portion 24, the abutment between the extension portion 24 and the first flange 314 forms a sealed hot air circulation channel between the hot air cavity 21 and the first pot body 311, which not only effectively improves the circulation efficiency of hot airflow in the hot air cavity 21 and the first pot body 311 to enhance cooking efficiency, but also reduces the leakage of hot airflow from the hot air cavity 21 and the first pot body 311 through the connection gap between the head assembly 20 and the base 10 that would otherwise affect normal cooking of food in the first pot body 311, effectively ensuring the cooking efficiency and effect of the air fryer.

As shown in FIG. 7, the outwardly folded second flange 325 is formed at the second top opening of the second pot body 321. When the pot support 322 and the second pot body 321 are disposed in the accommodating cavity 11 and the head assembly 20 covers the second pot assembly 32, the second flange 325 abuts against the extension portion 24, the abutment between the extension portion 24 and the second flange 325 forms a sealed hot air circulation channel between the hot air cavity 21 and the second pot body 321, which not only effectively improves the circulation efficiency of hot airflow in the hot air cavity 21 and the second pot body 321 to enhance cooking efficiency, but also reduces the leakage of hot airflow from the hot air cavity 21 and the second pot body 321 through the connection gap between the head assembly 20 and the base 10 that would otherwise affect normal cooking of food in the second pot body 321, effectively ensuring the cooking efficiency and effect of the air fryer.

As shown in FIGS. 1 to 7, in an optional embodiment, the first pot body 311 and the second pot body 321 are made of high-temperature-resistant transparent materials such as high-temperature-resistant transparent glass and high-temperature-resistant transparent plastic, a viewing window 14 communicating with the accommodating cavity 11 is formed at a side of the base 10, and a window assembly 15 closing the viewing window 14 is disposed at the viewing window 14. This configuration allows users to intuitively observe the cooking status of food in the air fryer through the viewing window 14, enabling better food cooking control, effectively improving food cooking effect, increasing cooking fun, and enhancing user experience.

As shown in FIGS. 4 and 7, in an optional embodiment, a first frying plate 315 with through holes is detachably suspended in the first pot body 311, and a second frying plate 326 with through holes is detachably suspended in the second pot body 321. When the first pot body 311 or the second pot body 321 is disposed in the accommodating cavity 11, a projection of the first frying plate 315 or the second frying plate 326 on a plane where the viewing window 14 is located at least partially overlaps the viewing window 14. By providing the first frying plate 315 and the second frying plate 326 in the first pot body 311 and the second pot body 321, respectively, and making their projections at least partially overlap the viewing window 14, food in the first and second pot bodies 311, 321 is lifted up, allowing hot airflow to uniformly heat the upper and lower surfaces of the food. Meanwhile, users can better observe the cooking status of food for improved cooking control, effectively enhancing food cooking efficiency and effect.

### Embodiment 2:

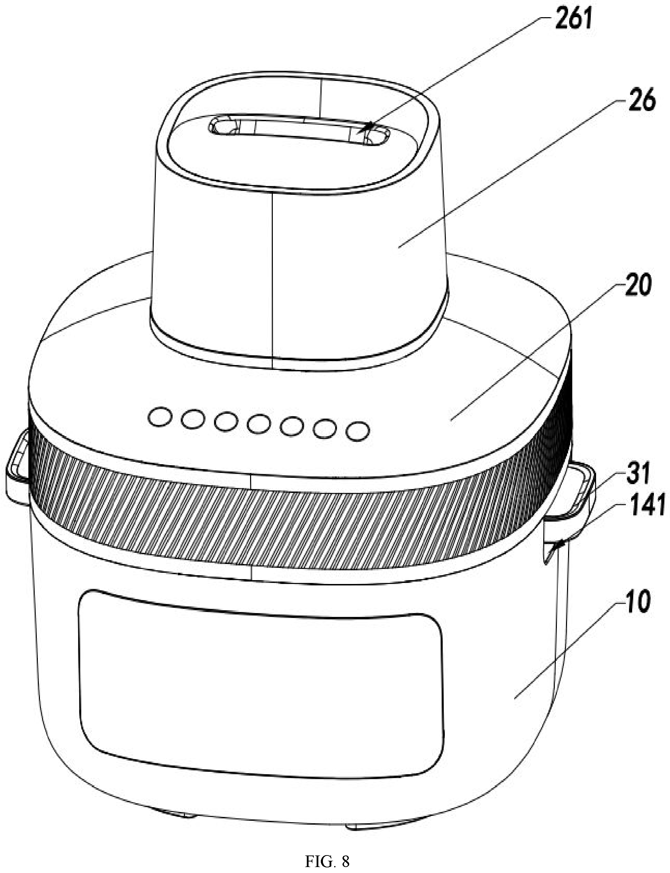

FIGS. 8 to 12 are schematic views of a second embodiment of the present disclosure, the air fryer comprises a base 10 and a head assembly 20, the base 10 defines an accommodating cavity 11 with an open top, and a pot body 30 with an open top is detachably suspended in the accommodating cavity 11, a heat dissipation gap 12 is adapted to be formed between the pot body 30 and an inner wall of the accommodating cavity 11, and a plurality of cold air vents 121 communicating with the heat dissipation gap 12 are circumferentially disposed at a peripheral edge of the open top of the accommodating cavity 11, the head assembly 20 is adapted to be detachably mounted on the base 10, and a bottom portion of the head assembly 20 is recessed upward to form a hot air cavity 21 opening downward, a thermal circulation fan 40 capable of generating circulating hot airflow is disposed in the hot air cavity 21, and a bottom opening is formed at a bottom of the hot air cavity 21, the bottom opening being adapted to correspond to and communicate with the open top of the pot body 30, a heat dissipation air duct 22 communicating with the atmosphere is disposed in the head assembly 20, and a heat dissipation assembly 50 capable of generating heat-dissipating cold airflow is disposed in the heat dissipation air duct 22, a plurality of heat dissipation ports 221 communicating with the heat dissipation air duct 22 are disposed around the bottom opening of the hot air cavity 21. When the head assembly 20 is mounted on the base 10, the heat dissipation ports 221 are adapted to correspond to and communicate with the cold air vents 121, the circulating hot airflow generated by the thermal circulation fan 40 passes through the bottom opening and the open top into the pot body 30 to cook food in the pot body 30. In the air fryer, the heat dissipation gap 12 formed between the pot body 30 and the inner wall of the accommodating cavity 11 is communicated with the heat dissipation air duct 22 via the heat dissipation ports 221 and the cold air vents 121, which not only achieves heat dissipation for the pot body 30 and the base 10, effectively improving the heat dissipation effect of the air fryer and reducing the scalding risk for users, but also simplifies the overall structure of the air fryer, lowering the production cost and user operation cost of the air fryer.

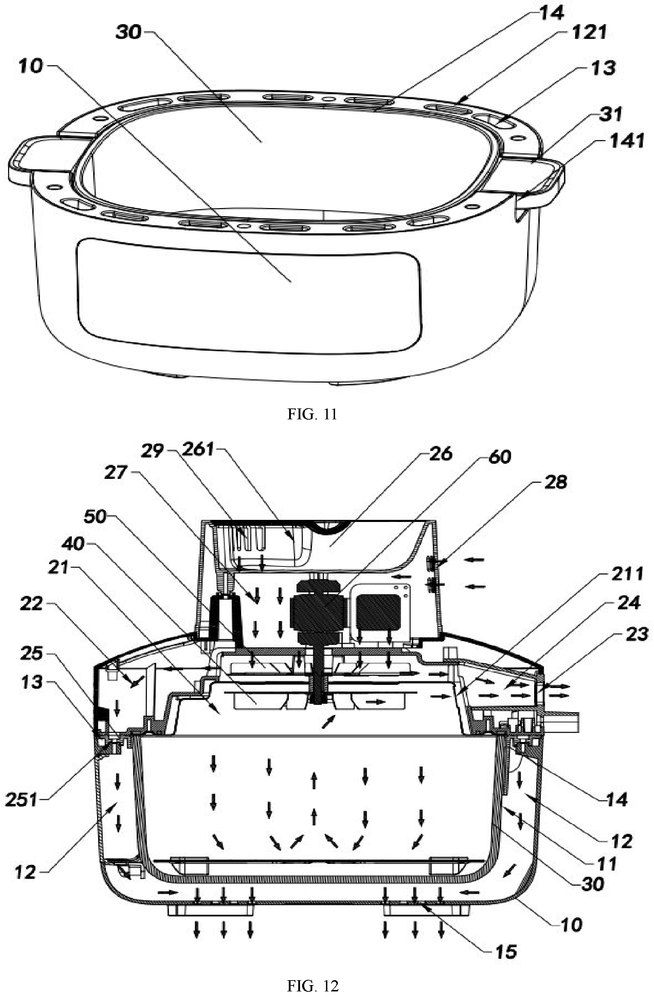

As shown in FIG. 12, in an optional embodiment, a hot air outlet 211 communicating with the hot air cavity 21 is formed on the hot air cavity 21, and an exhaust vent 23 corresponding to the hot air outlet 211 is formed on a housing of the head assembly 20, an air outlet channel 24 communicating the hot air outlet 211 and the exhaust vent 23 is disposed in the head assembly 20, the heat dissipation air duct 22 has a cold air outlet 221, and the heat dissipation air duct 22 is adapted to communicate with the air outlet channel 24 via the cold air outlet 221. By providing the air outlet channel 24 communicating with the heat dissipation air duct 22 in the head assembly 20, mixed hot and cold air exhaust is achieved for the air fryer, effectively reducing the temperature of airflow discharged from the exhaust vent 23, lowering the scalding risk for users, and significantly improving user safety.

As shown in FIG. 12, in an optional embodiment, the hot air outlet 211 is adapted to correspond to at least part of the thermal circulation fan 40. By arranging the hot air outlet 211 to correspond to at least part of the thermal circulation fan 40, excess hot airflow in the hot air cavity 21 is quickly discharged, effectively improving air exhaust efficiency and reducing energy consumption during air exhaust of the air fryer, thereby lowering user operation cost and enhancing user experience.

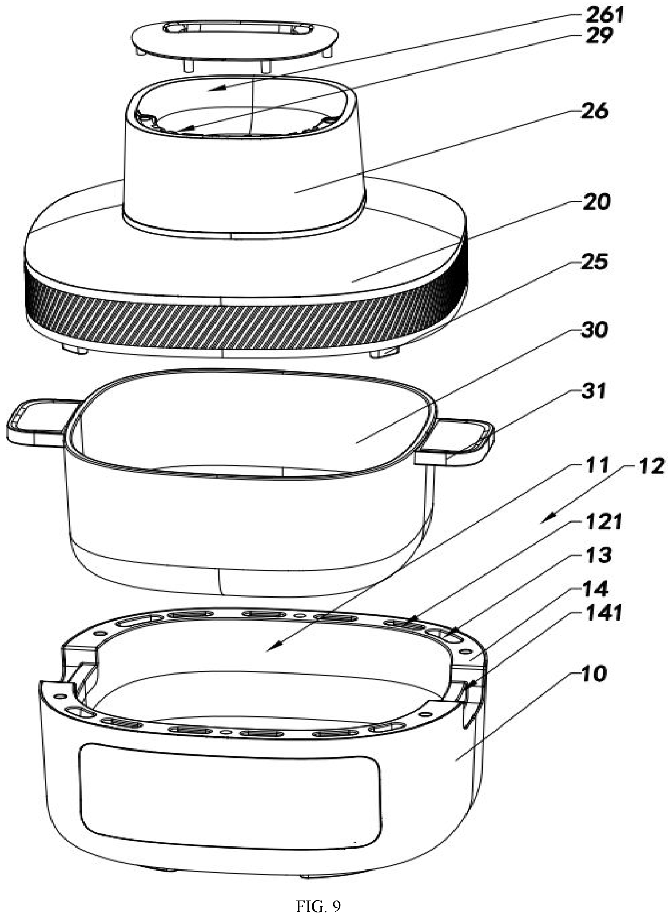

As shown in FIGS. 9 to 11, in an optional embodiment, a limiting portion 25 is disposed at a peripheral edge of the bottom opening of the hot air cavity 21, and the limiting portion 25 extends downward, and a limiting groove 13 corresponding to the limiting portion 25 is formed at a peripheral edge of the open top of the accommodating cavity 11. When the head assembly 20 is mounted on the base 10, the limiting portion 25 is adapted to be detachably engaged with the limiting groove 13, the limiting portion 25 and the limiting groove 13 are adapted to position the installation of the head assembly 20, effectively reducing the installation difficulty of the head assembly 20 and improving user convenience. Meanwhile, the limiting portion 25 and the limiting groove 13 are adapted to limit the installation of the head assembly 20, preventing random sliding and falling damage of the head assembly 20 during installation, effectively ensuring the performance stability of the air fryer and user experience.

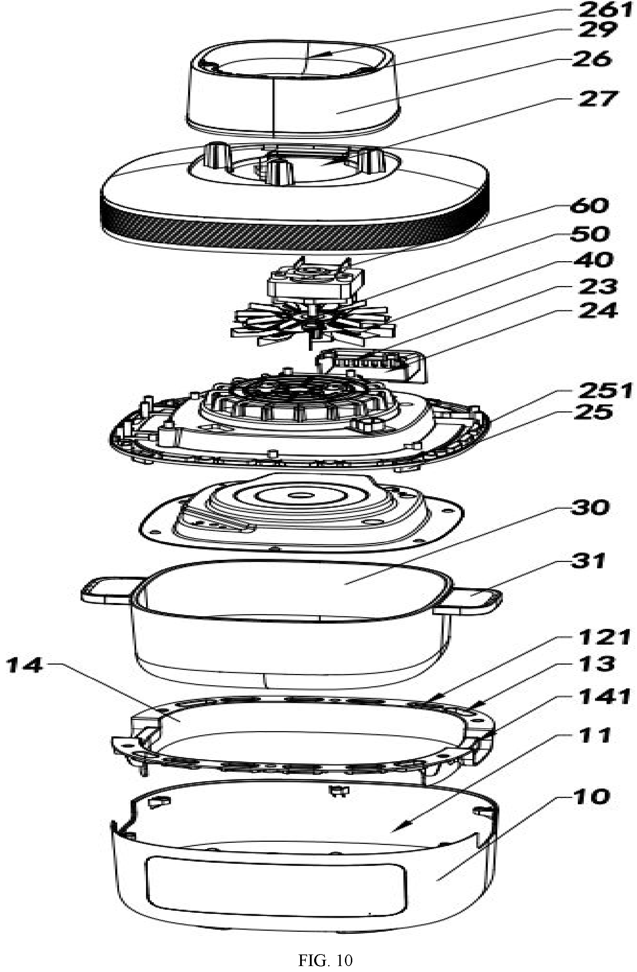

As shown in FIG. 10, in an optional embodiment, a communication channel 251 is disposed in the limiting portion 25, one end of the communication channel 251 communicates with the heat dissipation air duct 22, and the other end is provided with the heat dissipation port 221, the cold air vent 121 is disposed in the limiting groove 13. When the limiting portion 25 is engaged with the limiting groove 13, the communication channel 251 is adapted to communicate the heat dissipation air duct 22 and the heat dissipation gap 12. By providing the communication channel 251 in the limiting portion 25, heat-dissipating cold airflow in the heat dissipation air duct 22 is better guided into the heat dissipation gap 12 to dissipate heat for the base 10 and the pot body 30, which not only effectively improves heat dissipation efficiency, but also reduces the leakage of heat-dissipating cold airflow from the connection gap between the head assembly 20 and the base 10, thereby enhancing the heat dissipation effect.

As shown in FIGS. 8 to 12, in an optional embodiment, a handle 31 extending outward is formed at a top of a side wall of the pot body 30, and a base support 14 forming at least part of the heat dissipation gap 12 is disposed at a peripheral edge of the open top of the accommodating cavity 11, the handle 31 is adapted to rest on the base support 14, and the pot body 30 is adapted to be suspended in the accommodating cavity 11 via the handle 31. By suspending the pot body 30 in the accommodating cavity 11 via the base support 14 and the handle 31, the pot body 30 can better form the heat dissipation gap 12 with the inner wall of the accommodating cavity 11, ensuring the heat dissipation stability and performance stability of the air fryer. Meanwhile, the airflow passage area of the heat dissipation gap 12 is increased, improving the circulation efficiency of cold airflow in the heat dissipation gap 12 and further enhancing the heat dissipation efficiency and effect of the air fryer.

As shown in FIGS. 8 to 11, in an optional embodiment, a relief groove 141 matching the handle 31 is formed on the base support 14, and the handle 31 is adapted to be detachably limited in the relief groove 141, with a top of the handle 31 adapted to be flush with a top plane of the relief groove 141, the relief groove 141 is adapted to position the installation of the pot body 30, effectively reducing the installation difficulty of the pot body 30 and improving user convenience. Meanwhile, the relief groove 141 is adapted to limit the installation of the pot body 30, preventing random sliding of the pot body 30 during installation that causes localized food accumulation and poor cooking effect, effectively ensuring the food cooking effect of the air fryer. In addition, by disposing the handle 31 in the relief groove 141 and setting its top flush with the top plane of the relief groove 141, the handle 31 is concealed to enhance the overall aesthetic appearance of the air fryer.

As shown in FIGS. 9, 10 and 12, in an optional embodiment, a drive system 60 is disposed above the hot air cavity 21 and is drivingly connected to the heat dissipation assembly 50 and the thermal circulation fan 40 after extension, a housing 26 covers the drive system 60, and an installation cavity 27 is defined in the housing 26, a first ventilation opening 28 communicating the atmosphere and the installation cavity 27 is formed at a side of the housing 26, a lower portion of the installation cavity 27 communicates with the heat dissipation air duct 22, and a second ventilation opening 15 communicating the atmosphere and the heat dissipation gap 12 is formed at a bottom of the base 10. By providing the installation cavity 27 communicating the atmosphere and the heat dissipation air duct 22 above the hot air cavity 21 and disposing the drive system 60 in the installation cavity 27, external cold air is used to dissipate heat for electrical components such as the drive system 60 and control circuit in the installation cavity 27, reducing the impact of high-temperature heat transfer from the hot air cavity 21 on the electrical components in the installation cavity 27, effectively ensuring the performance stability and operational safety of the air fryer.

As shown in FIG. 12, in an optional embodiment, the first ventilation opening 28 is adapted to be disposed corresponding to at least part of the drive system 60. By arranging the first ventilation opening 28 to correspond to at least part of the drive system 60, external cold air can quickly contact the drive system 60 after entering the installation cavity 27 through the first ventilation opening 28 to dissipate heat for the drive system 60, which not only effectively improves the heat dissipation efficiency of the drive system 60, but also ensures the heat dissipation effect of the drive system 60 and enhances the performance stability and operational safety of the air fryer.

As shown in FIGS. 9, 10 and 12, in an optional embodiment, a downwardly recessed groove 261 is formed at a top of the housing 26, and a third ventilation opening 29 communicating the atmosphere and the installation cavity 27 is formed on a side wall of the downwardly recessed groove 261. By providing the third ventilation opening 29 communicating the atmosphere and the installation cavity 27 at the top of the housing 26, the intake volume and intake efficiency of external cold air into the air fryer are improved, thereby enhancing the heat dissipation efficiency and effect of the air fryer. Meanwhile, by forming the downwardly recessed groove 261 at the top of the housing 26 and disposing the third ventilation opening 29 on the side wall of the downwardly recessed groove 261, the third ventilation opening 29 is concealed to enhance the overall aesthetic appearance of the air fryer, and the probability of external liquid entering the housing through the third ventilation opening and damaging electrical components in the housing is reduced, effectively improving the performance stability and operational safety of the air fryer.

### Embodiment 3:

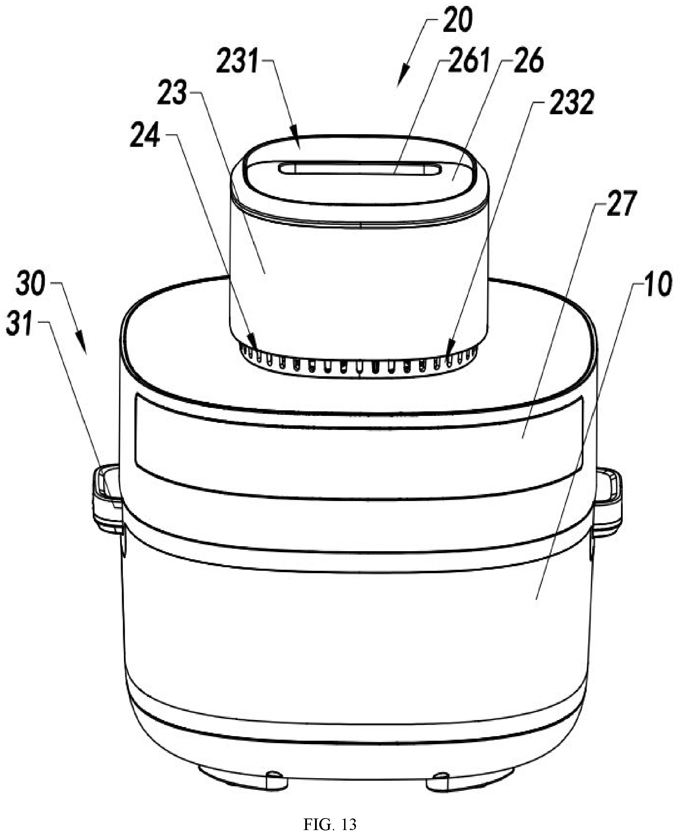

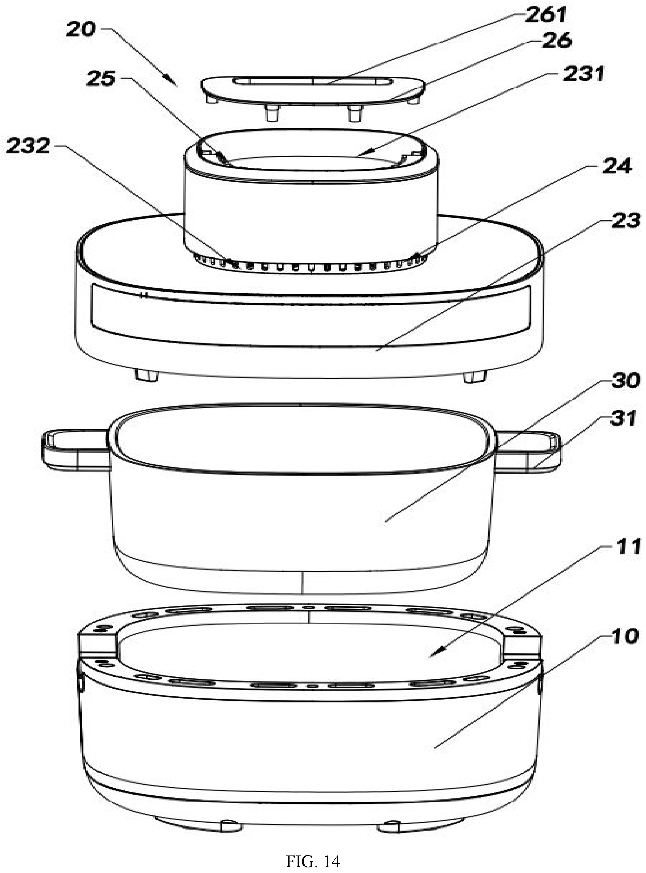

FIGS. 13 to 16 are schematic views of a third embodiment of the present disclosure, the air fryer comprises a base 10 and a head assembly 20 detachably mounted on the base 10, the base 10 defines an accommodating cavity 11 with an open top, and a pot body 30 with an open top is detachably disposed in the accommodating cavity 11, a bottom portion of the head assembly 20 is recessed upward to form a hot air cavity 21 opening downward, a thermal circulation fan 40 is disposed in the hot air cavity 21, and a bottom opening is formed at a bottom of the hot air cavity 21, the bottom opening being adapted to correspond to and communicate with the open top of the pot body 30, a heat dissipation air duct 22 communicating with the atmosphere is disposed outside the hot air cavity 21, and a heat dissipation assembly 50 and a drive system 60 are disposed in the heat dissipation air duct 22, the drive system 60 is drivingly connected to the heat dissipation assembly 50 and the thermal circulation fan 40, the head assembly 20 includes a housing 23 disposed around the drive system 60, and a plurality of first ventilation openings 24 communicating with the heat dissipation air duct 22 are spaced circumferentially on the housing 23. Projections of the first ventilation openings 24 and the drive system 60 in a vertical direction at least partially overlap. By providing a plurality of first ventilation openings 24 circumferentially on the housing 23, which communicate with the heat dissipation air duct 22 and correspond to the drive system 60, side air intake of the head assembly 20 is achieved, effectively increasing the intake volume of the heat dissipation air duct 22 and improving the heat dissipation efficiency and effect of the air fryer. Meanwhile, external cold air can quickly contact the drive system 60 after entering the heat dissipation air duct 22 to dissipate heat for the drive system 60, further enhancing the heat dissipation efficiency and effect of the drive system 60 and effectively ensuring the performance stability and reliability of the air fryer.

As shown in FIGS. 13 to 16, in an optional embodiment, an installation cavity 221 forming at least part of the heat dissipation air duct 22 is defined in the housing 23, a downwardly recessed groove 231 is formed at a top of the housing 23, and a third ventilation opening 25 communicating the atmosphere and the installation cavity 221 is formed on a side wall of the downwardly recessed groove 231. By providing the third ventilation opening 25 communicating the atmosphere and the installation cavity 221 at the top of the housing 23, the third ventilation opening 25 cooperates with the first ventilation openings 24 to achieve multi-side air intake of the air fryer, further increasing the intake volume and intake efficiency of the heat dissipation air duct 22 and improving the heat dissipation efficiency and effect of the head assembly 20. Meanwhile, heat-dissipating cold airflow in the heat dissipation air duct 22 is used to dissipate heat for electrical components such as the drive system 60 and control circuit in the installation cavity 221, ensuring normal operation of the electrical components in the installation cavity 221 and effectively guaranteeing the performance stability of the air fryer and user safety. In addition, by forming the downwardly recessed groove 231 at the top of the housing 23 and disposing the third ventilation opening 25 on the side wall of the downwardly recessed groove 231, the third ventilation opening 25 is concealed to enhance the overall aesthetic appearance of the air fryer, and the probability of external liquid entering the installation cavity 221 through the third ventilation opening 25 and damaging electrical components in the installation cavity 221 or causing electric shock to users is reduced, effectively ensuring the performance stability of the air fryer and user safety.

As shown in FIGS. 13 to 16, in an optional embodiment, a top cover 26 covering at least part of the third ventilation opening 25 is disposed at an opening of a top of the groove 231, and a grip portion 261 for gripping is formed on the top cover 26. By providing the top cover 26 covering at least part of the third ventilation opening 25 at the top opening of the groove 231, the third ventilation opening 25 is further concealed to enhance the overall aesthetic appearance of the air fryer, and the probability of external liquid entering the installation cavity 221 through the third ventilation opening 25 and damaging electrical components in the installation cavity 221 or causing electric shock to users is further reduced, effectively ensuring the performance stability of the air fryer and user safety.

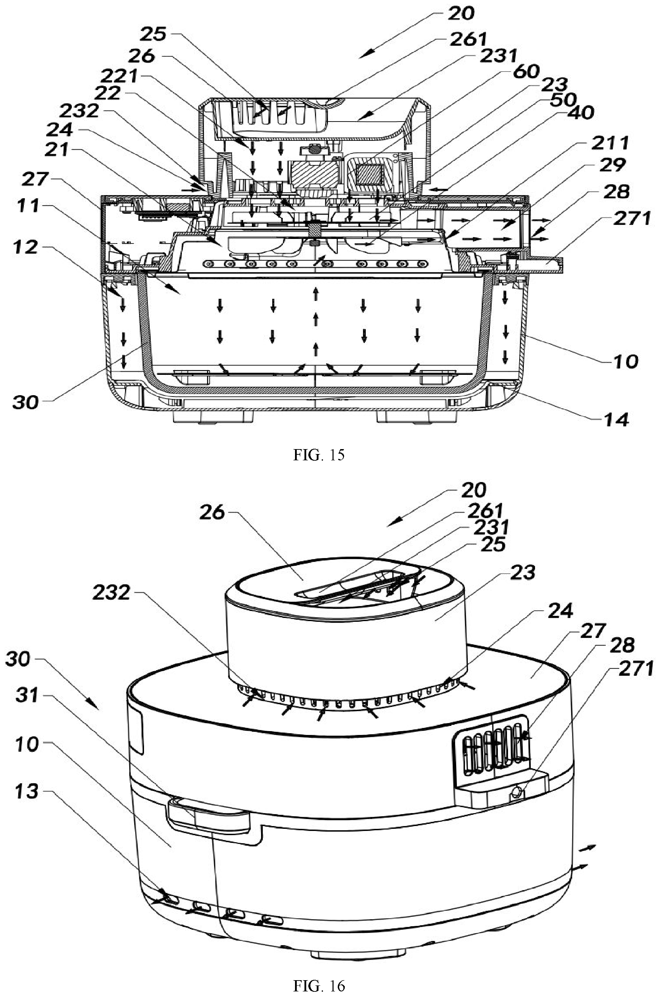

As shown in FIG. 15 and FIG. 16, in an optional embodiment, the head assembly 20 further includes a casing 27 covering the hot air cavity 21, an outer dimension of the casing 27 is larger than an outer dimension of the housing 23, and an exhaust vent 28 communicating with the hot air cavity 21 is formed on the casing 27, the exhaust vent 28 being located at a side of the casing 27. By disposing the exhaust vent 28 at a side of the casing 27 with a larger outer dimension than the housing 23, the distance between the first ventilation openings 24 and the exhaust vent 28 is increased, which not only reduces mutual interference between the first ventilation openings 24 and the exhaust vent 28 and effectively improves the air intake and exhaust efficiency of the air fryer, but also prevents the first ventilation openings 24 from sucking high-temperature airflow discharged from the exhaust vent 28 into the heat dissipation air duct 22 and damaging electrical components such as the control circuit and the drive system 60 in the heat dissipation air duct 22, effectively ensuring the performance stability of the air fryer and user safety.

As shown in FIGS. 13 to 16, in an optional embodiment, an inwardly recessed installation groove 232 is circumferentially formed at a joint between the housing 23 and the casing 27, and the first ventilation openings 24 are adapted to be arranged at a bottom of the inwardly recessed installation groove 232. By arranging the first ventilation openings 24 at the bottom of the inwardly recessed installation groove 232, the first ventilation openings 24 are concealed to enhance the overall aesthetic appearance of the air fryer, and the probability of external liquid entering the head assembly 20 through the first ventilation openings 24 and damaging electrical components in the head assembly 20 or causing electric shock to users is reduced, effectively ensuring the performance stability of the air fryer and user safety.

As shown in FIG. 15, in an optional embodiment, the head assembly 20 further includes a casing 27 covering the hot air cavity 21, a hot air outlet 211 communicating with the hot air cavity 21 is formed on the hot air cavity 21, and an exhaust vent 28 corresponding to the hot air outlet 211 is formed on the casing 27, an air outlet channel 29 communicating the hot air outlet 211 and the exhaust vent 28 is disposed in the head assembly 20, the heat dissipation air duct 22 has a cold air outlet, and the heat dissipation air duct 22 is adapted to communicate with the air outlet channel 29 via the cold air outlet. By communicating the heat dissipation air duct 22 with the air outlet channel 29, mixed hot and cold air exhaust is achieved for the air fryer, effectively reducing the temperature of airflow discharged from the exhaust vent 28. This not only prevents damage to walls or items behind the air fryer, but also reduces the scalding risk of airflow discharged from the exhaust vent 28 to users, effectively improving user safety and experience of the air fryer.

As shown in FIGS. 15 and 16, in an optional embodiment, the exhaust vent 28 is adapted to be located at a rear side of the casing 27, and a protruding portion 271 protruding outward is further disposed on the rear side of the casing 27 adjacent to the exhaust vent 28, the protruding portion 271 is located below the exhaust vent 28, and a projection of the protruding portion 271 and the exhaust vent 28 on a horizontal plane at least partially overlaps. By providing the protruding portion 271 at the rear side of the casing 27, the distance between the air fryer and a rear wall is increased, creating a sufficient circulation gap between the air fryer and the rear wall. This not only allows airflow discharged from the exhaust vent 28 to flow quickly and smoothly into the atmosphere, preventing turbulence caused by collision between hot airflow discharged from the exhaust vent 28 and the rear wall and effectively ensuring the air exhaust efficiency of the exhaust vent 28, but also prevents hot airflow discharged from the exhaust vent 28 from accumulating at the rear of the air fryer body, which would cause overheating at the rear of the body and damage to electrical components in the body or scalding to users, effectively ensuring the performance stability of the air fryer and user safety.

As shown in FIGS. 15 and 16, in an optional embodiment, a heat dissipation gap 12 communicating with the heat dissipation air duct 22 is formed between the pot body 30 and a side wall of the accommodating cavity 11, and second ventilation openings 13 communicating with the heat dissipation gap 12 are formed at bottoms of opposite side walls of the base 10. By disposing the second ventilation openings 13 at the bottoms of opposite side walls of the base 10, side air exhaust of the air fryer is achieved. This not only avoids the problem of conventional air fryers where the second ventilation openings 13 are arranged at the bottom of the base 10, causing heat-dissipating airflow to accumulate at the bottom of the base 10 during heat dissipation and resulting in overheating at the bottom of the base 10, but also prevents turbulence and poor air exhaust efficiency caused by collision between heat-dissipating airflow and a work surface during heat dissipation, effectively ensuring the heat dissipation efficiency and effect of the air fryer.

As shown in FIGS. 13 to 16, in an optional embodiment, handles 31 corresponding to the second ventilation openings 13 are formed at tops of opposite side walls of the pot body 30, and the handles 31 are adapted to protrude from opposite side walls of the base 10. By disposing the second ventilation openings 13 directly below the handles 31, a circulation gap with a length at least part of the handles 31 is formed outside the second ventilation openings 13, effectively ensuring the air exhaust efficiency of the second ventilation openings 13 and further guaranteeing the heat dissipation efficiency and effect of the air fryer.

As shown in FIG. 15, in an optional embodiment, a flow guide structure 14 for guiding airflow in the heat dissipation gap 12 toward the second ventilation openings 13 is disposed in the heat dissipation gap 12 adjacent to lower edges of the second ventilation openings 13. By guiding heat-dissipating cold airflow in the heat dissipation gap 12 via the flow guide structure 14, the heat-dissipating cold airflow in the heat dissipation gap 12 is discharged better and faster through the second ventilation openings 13, which not only effectively improves the air exhaust efficiency of the air fryer, but also further enhances the circulation efficiency of cold airflow in the air fryer, thereby improving the heat dissipation efficiency and effect of the air fryer.

The above content is a further detailed description of the present application in conjunction with specific preferred embodiments, and the purpose of the present application has been fully and effectively achieved. Those skilled in the art should understand that the embodiments of the present application shown in the above description and accompanying drawings are only examples and do not limit the present application. For those of ordinary skill in the art, without departing from the present application, several simple deductions or substitutions can be made, which should all be regarded as falling within the scope of patent protection determined by the claims submitted by the present application.

### Industrial Applicability

In the present application, by configuring the air fryer in a split-type structure, the head assembly can be separated from the base for convenient storage and transportation, and users can carry the separated head assembly and base for outdoor use, effectively improving the applicability and user convenience of the air fryer. Meanwhile, by providing interchangeable first and second pot assemblies with different capacities in the air fryer, a series of limitations caused by the fixed capacity of a single pot body in conventional air fryers are eliminated, allowing users to switch between different pot bodies according to the number of users and/or food types to meet their diversified cooking needs, thereby significantly enhancing the applicability and practicality of the air fryer. On the other hand, by forming a heat dissipation gap between the pot body and the inner wall of the accommodating cavity and communicating the heat dissipation gap with the heat dissipation air duct via the heat dissipation ports and cold air vents, heat dissipation for the pot body and base is achieved, effectively improving the heat dissipation effect of the air fryer and reducing the scalding risk for users. Meanwhile, the overall structure of the air fryer is simplified, lowering the production cost and user operation cost of the air fryer.

## Claims

1. An air fryer with high applicability, comprising:
a base defining an accommodating cavity with an open top;
a head assembly detachably mounted on the base, a bottom portion of the head assembly being recessed upward to form a hot air cavity opening downward, a thermal circulation fan being disposed in the hot air cavity, and a bottom opening being formed at a bottom of the hot air cavity;
a first pot assembly including a first pot body having a first top opening, the first pot body being detachably disposed in the accommodating cavity, wherein when the first pot body is disposed in the accommodating cavity and the head assembly covers the first pot assembly, the first top opening of the first pot body communicates with the bottom opening of the hot air cavity; and
a second pot assembly including a second pot body having a second top opening and a pot support disposed outside the second pot body for supporting the second pot body, the second top opening being smaller in size than the first top opening, the pot support being detachably disposed in the accommodating cavity, wherein when the pot support and the second pot body are disposed in the accommodating cavity and the head assembly covers the second pot assembly, the second top opening of the second pot body communicates with the bottom opening of the hot air cavity.

2. The air fryer with high applicability according to claim 1, wherein the first pot assembly includes a first handle extending outward from a top of the first pot body, a second handle extending outward is disposed on the pot support, and a relief groove matching the first handle and the second handle is formed at a peripheral edge of the open top of the accommodating cavity,
wherein when the first pot body is disposed in the accommodating cavity, the first handle is located in the relief groove, and a top of the first handle is adapted to be flush with a top plane of the relief groove; and
wherein when the pot support and the second pot body are disposed in the accommodating cavity, the second handle is located in the relief groove, and a top of the second handle is adapted to be flush with the top plane of the relief groove.

3. The air fryer with high applicability according to claim 1, wherein the head assembly includes a housing, and a recess recessed inward is formed at a top of the housing, the recess defining a grip portion for gripping.

4. The air fryer with high applicability according to claim 1, wherein a second flange is provided at the second top opening of the second pot body, the second flange being folded outward, a support step corresponding to the second flange is disposed on the pot support, and the second pot body is detachably mounted on the support step of the pot support via the second flange, the pot support is of an annular structure, and when the second pot body is mounted on the support step of the pot support via the second flange, an upper surface of the second flange is flush with an upper surface of the pot support.

5. The air fryer with high applicability according to claim 1, wherein an extension portion is disposed at a peripheral edge of the bottom opening of the hot air cavity, a first flange is formed at the first top opening of the first pot body, and a second flange is provided at the second top opening of the second pot body, the extension portion extends outward, the first flange is folded outward, and the second flange is folded outward,
wherein when the first pot body is disposed in the accommodating cavity and the head assembly covers the first pot assembly, the first flange abuts against the extension portion; and
wherein when the pot support and the second pot body are disposed in the accommodating cavity and the head assembly covers the second pot assembly, the second flange abuts against the extension portion.

6. The air fryer with high applicability according to claim 1, wherein the first pot body and the second pot body are made of high-temperature-resistant transparent materials, a viewing window communicating with the accommodating cavity is formed at a side of the base, and a window assembly closing the viewing window is disposed at the viewing window, a first frying plate with through holes is detachably suspended in the first pot body, a second frying plate with through holes is detachably suspended in the second pot body, and when the first pot body or the second pot body is disposed in the accommodating cavity, a projection of the first frying plate or the second frying plate on a plane where the viewing window is located at least partially overlaps the viewing window.

7. The air fryer with high applicability according to any one of claims 1-6, wherein a pot body with an open top is detachably suspended in the accommodating cavity, the pot body including the first pot assembly and the second pot assembly, a heat dissipation gap is adapted to be formed between the pot body and an inner wall of the accommodating cavity, and a plurality of cold air vents communicating with the heat dissipation gap are circumferentially disposed at a peripheral edge of the open top of the accommodating cavity;
a heat dissipation air duct communicating with the atmosphere is disposed in the head assembly, a heat dissipation assembly is disposed in the heat dissipation air duct, a plurality of heat dissipation ports communicating with the heat dissipation air duct are disposed around the bottom opening of the hot air cavity, and when the head assembly is mounted on the base, the heat dissipation ports correspond to and communicate with the cold air vents.

8. The air fryer with high applicability according to claim 7, wherein a hot air outlet communicating with the hot air cavity is formed on the hot air cavity, an exhaust vent corresponding to the hot air outlet is formed on a housing of the head assembly, and an air outlet channel communicating the hot air outlet and the exhaust vent is disposed in the head assembly; the heat dissipation air duct has a cold air outlet, the heat dissipation air duct is adapted to communicate with the air outlet channel via the cold air outlet, and the hot air outlet is adapted to correspond to at least part of the thermal circulation fan.

9. The air fryer with high applicability according to claim 7, wherein a limiting portion is provided at a peripheral edge of the bottom opening of the hot air cavity, and the limiting portion extends downward, a limiting groove corresponding to the limiting portion is formed at a peripheral edge of the open top of the accommodating cavity, and when the head assembly is mounted on the base, the limiting portion is detachably engaged with the limiting groove, a communication channel is disposed in the limiting portion, one end of the communication channel communicates with the heat dissipation air duct, and the other end is provided with the heat dissipation port; the cold air vent is disposed in the limiting groove, and when the limiting portion is engaged with the limiting groove, the communication channel communicates the heat dissipation air duct and the heat dissipation gap.

10. The air fryer with high applicability according to claim 7, wherein a handle extending outward is formed at a top of a side wall of the pot body, a base support forming at least part of the heat dissipation gap is disposed at a peripheral edge of the open top of the accommodating cavity, the handle rests on the base support, the pot body is suspended in the accommodating cavity via the handle, a relief groove matching the handle is formed on the base support, the handle is detachably limited in the relief groove, and a top of the handle is flush with a top plane of the relief groove.

11. The air fryer with high applicability according to claim 7, wherein a drive system is disposed above the hot air cavity and is drivingly connected to the heat dissipation assembly and the thermal circulation fan, a housing covers the drive system, an installation cavity is defined in the housing, a first ventilation opening communicating the atmosphere and the installation cavity is formed at a side of the housing, a lower portion of the installation cavity communicates with the heat dissipation air duct, and a second ventilation opening communicating the atmosphere and the heat dissipation gap is formed at a bottom of the base, a downwardly recessed groove is formed at a top of the housing, and a third ventilation opening communicating the atmosphere and the installation cavity is formed on a side wall of the downwardly recessed groove.

12. The air fryer with high applicability according to any one of claims 7-11, wherein a heat dissipation assembly and a drive system are disposed in the heat dissipation air duct, the drive system being drivingly connected to the heat dissipation assembly and the thermal circulation fan; the head assembly includes a housing disposed around the drive system, a plurality of first ventilation openings communicating with the heat dissipation air duct are spaced circumferentially on the housing, and projections of the first ventilation openings and the drive system in a vertical direction at least partially overlap.

13. The air fryer with high applicability according to claim 12, wherein an installation cavity forming at least part of the heat dissipation air duct is defined in the housing, a downwardly recessed groove is formed at a top of the housing, a third ventilation opening communicating the atmosphere and the installation cavity is formed on a side wall of the downwardly recessed groove, a top cover covering at least part of the third ventilation opening is disposed at an opening of a top of the downwardly recessed groove, and a grip portion for gripping is formed on the top cover.

14. The air fryer with high applicability according to claim 12, wherein the head assembly further includes a casing covering the hot air cavity, an outer dimension of the casing is larger than an outer dimension of the housing, an exhaust vent communicating with the hot air cavity is formed on the casing, the exhaust vent is located at a side of the casing, an inwardly recessed installation groove is circumferentially formed at a joint between the housing and the casing, and the first ventilation openings are arranged in the inwardly recessed installation groove.

15. The air fryer with high applicability according to claim 12, wherein a heat dissipation gap communicating with the heat dissipation air duct is formed between the pot body and a side wall of the accommodating cavity, and second ventilation openings communicating with the heat dissipation gap are formed at bottoms of opposite side walls of the base.
